**Europäisches Patentamt**

(19) **European Patent Office**

**Office européen des brevets**

(11) **EP 0 550 011 B1**

(12) # EUROPEAN PATENT SPECIFICATION

(45) Date of publication and mention
of the grant of the patent:
**25.02.1998 Bulletin 1998/09**

(51) Int. Cl.$^6$: **B32B 27/36**, B32B 27/20,
C08K 3/22, C08J 5/16,
G11B 5/704

(21) Application number: **92121904.4**

(22) Date of filing: **23.12.1992**

(54) **Method for the production of a biaxially orientated laminated polyester film**

Verfahren zur Herstellung eines biaxial orientierten Polyesterfilm-Laminats

Procédé de préparation d'un film de polyester stratifié orienté biaxialement

(84) Designated Contracting States:
**DE FR GB IT LU NL**

(30) Priority: **27.12.1991 JP 345960/91**

(43) Date of publication of application:
**07.07.1993 Bulletin 1993/27**

(73) Proprietor:
**DIAFOIL HOECHST CO., LTD
Bunkyo-ku Tokyo (JP)**

(72) Inventor: **Masuda, Narihiro
Yokohama-shi, Kanagawa-ken (JP)**

(74) Representative:
**TER MEER STEINMEISTER & PARTNER GbR
Mauerkircherstrasse 45
81679 München (DE)**

(56) References cited:
**EP-A- 0 401 689          DE-B- 2 428 464**

- **DATABASE WPIL, no. 89-036 092, DERWENT
PUBLICATIONS LTD., London, GB**

Remarks:
The file contains technical information submitted
after the application was filed and not included in
this specification

**Description**

BACKGROUND OF THE INVENTION

Field of the Invention

The present invention relates to a method for the production of a biaxially orientated laminated polyester film which has smooth slipping properties and running durability and is useful as a base film of a magnetic tape.

Description of the Related Art

Recently, a picture area of a TV set is enlarged, and there is a strong requirement for improved quality of video images. Accordingly, needs for a video tape with a good quality, namely a high grade or super high grade video tape are increasing. Such high density video tape is generally produced by smoothening one surface of a polyester base film to improve electromagnetic conversion characteristics of a magnetic layer formed thereon and forming a back coating layer on the other surface of the base film to maintain good running properties. The back coating layer is required to have a small coefficient of friction to maintain the running properties and also to have durability such that the coefficient of friction does not increase after repeated running.

In the mean time, a base film having different roughnesses on two surfaces of the film, namely a dual surface film has been proposed (see Japanese Patent Kokai Publication Nos. 206042/1989 and 77431/1990). In such film, a large amount of minute particles are added to a running surface of the film to form a number of minute and uniform protuberances whereby the slipping property is maintained, while no particle or much smaller amount of the minute particles than in the running surface is added to a surface of the film on which a magnetic layer is formed to maintain the smoothness of the surface.

The dual surface film intends to impart the base film itself, more precisely, the running surface with the same function as that of a back coating layer. If such film were realized, a great advantage would be achieved since coating, drying and curing steps necessary for the formation of the back coating could be neglected.

However, the dual surface film has not been practically used. One of the drawbacks of the dual surface film is that running durability of the dual surface film is worse than the film having the back coating layer. The worse durability indicates that the protuberances on the running surface are scraped off so that scraped particles deposit on a magnetic head. Further, the scraped protuberances have lower height, so that the coefficient of friction increases. These problems are caused by the fact that the running surface is formed by the polyester which is softer than a material forming the back coating layer. These problems should be solved in order to impart the polyester base film with the same function as the back coating layer.

SUMMARY OF THE PRESENT INVENTION

An object of the present invention is to provide a method for the production of a dual surface polyester film having improved slipping properties and running durability.

According to the present invention, there is provided a method for the production of a biaxially orientated laminated polyester film comprising at least two layers, at least one outermost layer of which contains 0.1 to 5.0 % by weight based on the weight of the polyester of aluminum oxide particles (A) having an average primary particle size of 5 to 40 nm and 0.3 to 10 % by weight based on the weight of the polyester of particles (B) having an average primary particle size of 10 to 100 nm which are other than aluminum oxide particles, wherein both types of particles are present in the film in the form of agglomerates to such an extent that the existence probability of discrete primary particles of the particles (A) and (B) in said outermost layer is not larger than 50 %, said outermost layer has a surface roughness Ra of 5 to 25 nm, and a ratio of a height Rt of the largest protuberance to Ra (Rt/Ra) is not larger than 15, by biaxially orientating a laminated polyester film, characterized in that said particles (A) are added to a raw material polyester for said at least one outermost layer in the form of a slurry of agglomerates having an average particle size of between 50 to 400 nm, and said particles (B) are added to said raw material polyester in the form of a slurry of agglomerates having an average particle size of between 100 and 400 nm.

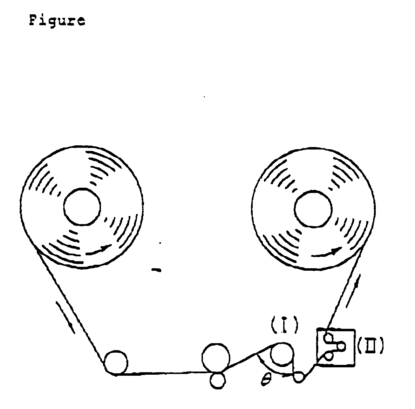

BRIEF DESCRIPTION OF THE DRAWING

The Figure in a schematic view of an apparatus used for evaluating abrasion resistance in the Examples.

DETAILED DESCRIPTION OF THE INVENTION

The polyester to be used in the present invention is a polyester prepared from an aromatic dicarboxylic acid or its ester and a glycol. Examples of the aromatic dicarboxylic acid are terephthalic acid, isophthalic acid, 2,6-naphthalene dicarboxylic acid, adipic acid, sebacic acid, oxycarboxylic acids (e.g. p-oxyethoxybenzoic acid, etc.) and the like. They may be used independently or as a mixture. Examples of the glycol are ethylene glycol, diethylene glycol, 1,4-cyclohexanedimethanol, butanediol, neopentyl glycol, and the like. They may be used independently or as a mixture. Preferably, in the polyester, 80 % by mole or more of repeating units are ethylene-terephthalate repeating units or ethylene-2,6-naphthalate repeating units.

One of the most important properties of the polyester film obtained according to the method of the present invention is that the aluminum oxide particles and the other particles are present in the film in the form of agglomerates of minute primary particles and contained in a comparatively thin part of at least one outermost layer (a slipping layer) (hereinafter referred to as "Layer A") of the film at a high concentration.

To form the agglomerates in the film, the particles should be in the form of agglomerates of the primary particles and suitably dispersed in the film by an orientation stress.

The present invention uses two kinds of the particles in the form of agglomerates, and they are piled up or mixed by the orientation stress. As the result, the aluminum oxide particles which improve the abrasion resistance and the other particles which form the minute protuberances are present in the formed protuberances at a significantly increased probability. Thereby, each protuberance is hardly scraped off so that the film as a whole has improved abrasion resistance and scratch resistance, and the coefficient of friction after the repeating running is substantially the same as the original coefficient of friction, that is, the film has good running durability.

If particles which are present discretely and not in the agglomerate form are used as the other particles, they are not piled up on and mixed with the aluminum oxide particles by the orientation step. Then, the aluminum oxide particles are present in flat portions between the protuberances at a high probability.

The aluminum oxide particles are preferably prepared from anhydrous aluminum chloride by flame hydrolysis in a gas phase, while aluminum oxide particles, which are prepared by hydrolyzing an aluminum alkoxide such as $Al(OC_2H_7)_3$ or $Al(OC_4H_9)_3$ in a liquid phase under suitable conditions to obtain particles having an average particle size of 1 $\mu$m or less, may be used. In the latter case, it may be possible to add an acid to a synthesized slurry to obtain a transparent sol, form a gel from the sol and heat the gel at a temperature of 500°C or higher to obtain a sintered material.

The aluminum oxide particles prepared by the above methods often form agglomerates having a size of larger than 1 $\mu$m. The agglomerates having the suitable average particle size as defined above can be easily obtained by comminuting the coarse agglomerates. For this comminution, any of conventionally used apparatuses such as a rod mill, a ball mill, a hammer mill, an oscillating rod mill, an oscillating ball mill, a pan mill, a roller mill, an impact mill, an agitation grinder mill, a sand grinder mill, a nanomizer, a pearl mill and the like may be used. The coarse agglomerates may be comminuted by roughly grinding them by dry grinding, making a slurry in, for example, ethylene glycol, then wet grinding them and classifying (sieving) or filtrating them.

The average particle size of the primary particles of the aluminum oxide particles is usually from 5 to 40 nm, preferably from 10 to 30 nm. This primary particle size can be achieved by selecting the conditions in the above production process.

When the average primary particle size is less than 5 nm, the particles in the agglomerates often strongly bond each other and are not separated by the orientation stress. Therefore, the specific effect of the present invention is not achieved. When the average primary particle size is larger than 40 nm, the agglomerates themselves are too large or the number of the primary particles constituting the agglomerates deceases so that an extent of the spreading of the particles is limited when they are dispersed by the orientation stress, whereby they are not well piled up on or mixed with the other particles.

Before being added to the polyester, the aluminum oxide particles are agglomerated in the slurry and their average particle size is from 50 to 400 nm. When this particle size is less than 50 nm, the effect of the present invention is not achieved. When this particle size is exceeds 400 nm, the magnetic characteristics of the magnetic tape using the polyester film deteriorates.

Preferably, aluminum oxide used in the present invention is $\delta$-aluminum oxide, while $\theta$- or $\gamma$-aluminum oxide may be used. A mixture of two different types of aluminum oxide may be used. $\alpha$-Aluminum oxide is not practically preferred, since it is hard and abrades apparatuses in the comminuting step of the aluminum oxide particles or melt extrusion of the polyester.

The kind of other particle is not critical. Carbon black such as furnace black, thermal black, lamp black or acetylene black is preferred, since it is easily dispersed by the orientation stress during the film formation.

The average primary particle size of the other particles is from 10 to 100 nm, preferably from 20 to 60 nm.

When the primary particle size of the other particles is less than 10 nm, an adhesive force between the primary particles are so strong that the agglomerates are not dispersed by the orientation stress. When the primary particle size is larger than 100 nm, the number of the primary particles in each agglomerate with a suitable size decreases.

Preferred examples of the carbon black having the above primary particle size are MCC, HAF, LFC, FF, LCC, LCF, ISAE and the like. FT is less preferred.

Before being added to the polyester, the other particles are agglomerated in the slurry and their average particle size is from 100 to 400 nm. When this particle size is less than 100 nm, the sliding property of the film cannot be improved. When this particle size exceeds 400 nm, the film surface is roughened.

To obtain the agglomerates of the other particles having the above average particle size, they are dry or wet ground and optionally classified or filtrated as in the case of the aluminum oxide particles.

The agglomerated particles are compounded in the polyester by dispersing the particles in ethylene glycol to form a slurry and then adding the slurry to a reaction system at an initial stage of the polymerization of the polyester, or by blending the agglomerated particles in the polyester resin and mixing them in an extruder.

When the aluminum oxide particles are comminuted by the wet grinding, practically the slurry of the aluminum oxide particles is added to the reaction system at the initial stage of the polymerization. When carbon black is added to the reaction system at the initial stage of the polymerization, a conventional dispersant is preferably used to prevent the formation of the coarse agglomerates. When the polyester resin and the agglomerates are mixed in the extruder, the agglomerates are preferably filtrated through a filter which has a large filtration area and achieves precise filtration to remove the coarse agglomerates.

In order that the aluminum oxide particles and the other particles are contained in Layer A of the polyester film, these two kinds of the particles are added to the raw material resin. Alternatively, the two kinds of the particles are contained in separate two portions of the resins and they are blended before the production of the film.

The aluminum oxide particles and the other particles should be present in a mixed state at a high concentration in Layer A of the polyethylene film. The aluminum oxide particles are contained in a concentration of 0.1 to 5.0 %, preferably 0.3 to 3.0 % by weight based on the weight of the polyester in Layer A, and the other particles are contained in a concentration of 0.3 to 10 % by weight, preferably 0.5 to 7.0 % by weight based on the weight of the polyester in Layer A.

When the concentration of the aluminum oxide particles is less than 0.1 % by weight, the film has insufficient abrasion resistance and scratch resistance. When the concentration of the aluminum oxide particles exceeds 5.0 % by weight, the effect of the present invention is saturated and rather too coarse protuberances often appear.

When the concentration of the other particles is less than 0.3 % by weight, the film has insufficient slipping property. When the concentration of the other particles exceeds 10 % by weight, the surface roughness of Layer A becomes too large to cause significant back-side transfer onto the magnetic layer.

In Layer A of the polyester film, an existence probability of the discrete primary particles of each of aluminum oxide and the other particle should be not larger than 50 %, preferably not larger than 30 %. When the existence probability of the discrete primary particles exceeds 50 %, the number of the particles which are present in the agglomerate form decreases so that the formation of the protuberances on the film surface is difficult and further the abrasion resistance and the scratch resistance are deteriorated. To achieve the existence probability of 50 % or smaller, a balance between the dispersibility of the agglomerates and the strength of the orientation stress is suitably adjusted.

The surface roughness of Layer A of the polyester film of the present invention ($Ra^A$) is from 5 to 25 nm, preferably from 7 to 20 nm. When $Ra^A$ is smaller than 5 nm, the good running property is not imparted to the magnetic tape. When it exceeds 25 nm, the back-side transfer onto the magnetic layer surface becomes significant and the electromagnetic conversion characteristics are deteriorated while the running property of the magnetic tape is good.

On the surface of Layer A, a ratio of a height of the largest protuberance to Ra (Rt/Ra) is not larger than 15, preferably not larger than 12, more preferably not larger than 10. If this ratio exceeds 15, many coarse protuberances form so that the back-side transfer onto the magnetic layer surface becomes significant and the electromagnetic conversion characteristics are deteriorated. In addition, when the tape is contacted to the guide pin during the tape running, the stress is concentrated at the coarse protuberances, whereby the running durability of the tape is unpreferably worsened.

Insofar as the polyester film of the present invention has the above polyester compositions in Layer A and other layer(s) (hereinafter referred to Layer B), the compositions of Layers A and B may be the same or different. Preferably, each of the polyesters of Layers A and B has a melt viscosity of 500 to 20,000 poise (50 to 2,000 Pa·s) when measured under a shear rate of 100/sec. at 280°C. More preferably, under these conditions, the melt viscosities of the polyesters of Layers A and B satisfy the equation:

$$|\log_{10}\eta^A - \log_{10}\eta^B| \leq 0.5$$

in which $\eta^A$ is a melt viscosity (poise) of the polyester of Layer A and $\eta^B$ is a melt viscosity (poise) of the polyester of Layer B.

When the polyester film consists of two layers, one of which constitutes Layer A and the other of which constitutes Layer B, it is necessary for Layer B to have a suitable slipping property for coating a magnetic layer thereon. To this end, Layer B contains 0.001 to 10 % by weight of particles having an average particle size of 5 to 1000 nm in order to have a surface roughness $Ra^B$ of 5 to 40 nm.

The polyester film may consist of two layers (Layers A and B) or three or more layers (for example, Layer A/Layer B/Layer A). Layer B may be a laminate.

When Layer B is formed from a recycled polyester film, for example, slit edges, a yield of the film production can be increased.

A thickness of Layer A or B is not critical. In general, the thickness of Layer A is from 0.1 to 7.0 µm. Insofar as the surface roughness of Layer B has no influence on Layer A, the thickness of Layer A has some influence on the surface roughness of Layer A. When the thickness of Layer A decreases, $Ra^A$ decreases, while when this thickness increases, the $Ra^A$ increases. To achieve the above defined $Ra^A$ and the $Rt^A/Ra^A$ ratio, an amount of the other particles to be added to Layer A is increased when the thickness of Layer A is small, or decreased when the thickness of Layer A is large. When the thickness of Layer A is smaller than 1 µ m, the surface roughness of Layer A tends to increase by the influence of the surface roughness of Layer B. Therefore, the particles having a small particle size is added to Layer B in a small amount. When the thickness of Layer A exceeds 7 µm, to achieve the above defined $Ra^A$ and the $Rt^A/Ra^A$ ratio, an amount of the other particles is made small. In this case, the effects of the present invention may not be achieved.

Layers A and B are preferably laminated by coextrusion in view of the production cost and stability of the film quality, though they may be laminated by dry lamination.

The coextrusion can be carried out by a per se conventional method. For example, using two or three extruders, streams of the polyester melt are joined in a two or three layer manifold or feed block to laminate them, extruded from a slot die, and cooled on a casting roll to obtain an unoriented film. In this method, preferably a static mixer and a metering pump are provided in the melt line to maintain the uniformity of the film.

The production of the polyester film according to the method of the present invention will be explained more in detail.

After a compound for Layer A and a compound for Layer B are separately dried, if necessary, they are charged in the respective extruders and extruded at an extrusion temperature higher than a melting point and lower than a decomposition temperature to form a sheet. The laminate sheet is cooled and solidified on the casting roll to obtain the unoriented film. Preferably, the laminate sheet is cooled and solidified by an electrostatic pinning method since the film having the uniform thickness is produced.

Then, the film is biaxially oriented. Either of sequential biaxial orientation and simultaneous biaxial orientation can be employed. In particular, the sequential orientation by which the unoriented film is first oriented in a machine direction and then in a transverse direction is advantageous since the agglomerates of the particles in Layer A are dispersed and spread.

In the step of orientation in the machine direction, an orientation temperature suitable for the specific polyester composition is selected from a temperature range between 50°C and 180°C, and a draw ratio is selected from a range between 3.0 and 7.0 times.

Though the orientation may be carried out in one step, it can be carried out in two or more steps insofar as the orientation temperature and the draw ratio are in the above ranges. The multistep orientation is extremely advantageous for the dispersion of the agglomerates of the particles in Layer A. In this case, the orientation temperatures of the two or more steps may be the same or different.

A orientation rate in the machine direction is preferably from 5000 to 70,000 %/min. in view of the uniformity of the film thickness.

In general, a tenter is used for the orientation of the film in the transverse direction. Preferably, the film is oriented in the transverse direction at an orientation temperature of 80 to 170°C, at a draw ratio of 3.0 to 5.0 and at an orientation rate of 100 to 20,000 %/min.

After the orientation, the oriented film is heat treated at a temperature of 170 to 250°C, preferably 180 to 230°C for 1 to 60 seconds. If necessary, after the orientation in the transverse direction, the film may be again oriented in the machine direction and then in the transverse direction. Thereafter, the oriented film may be again heat treated.

The present invention will be illustrated by the following Examples. In Examples, "parts" are by weight.

In the Examples, the properties are measured or evaluated as follows:

(1) <u>Average particle size of primary particles</u>

A sample film of 100 nm in thickness is cut out with a microtome so that a cross section of the film in a thickness direction can be observed and embedded and fixed in a resin. A photograph of the sample is taken by a transmitting electron microscope (H-9000 manufactured by Hitachi Ltd., magnification of of 100,000, acceleration voltage of 300 kV, EPMA acceleration voltage of 300 kV), and particle sizes are measured. When the aluminum oxide particles and the carbon black particles are intermingled and they cannot be identified, they are separated by whether or not aluminum is detected when they are analyzed by an electron progmicroanalyzer (EPMA).

The average particle size is calculated as follow:

With assuming each particle as an ellipse, its major and minor axes are measured and averaged. This averaged value is used as a primary particle size. One hundred particles are arbitrarily selected and their primary particle sizes are averaged to obtain the average particle size of the primary particles.

(2) Average particle size of agglomerates

Using, as a solvent, a water-ethanol mixture (weight ratio of 80:20) for the carbon black particles or ethylene glycol for the aluminum oxide particles, the particles are dispersed to prepare a slurry. The agglomerates are precipitated by a centrifugal sedimentation method using Disc Centrifuge-4 (manufactured by Joyce-Loebl) and their sizes are averaged to obtain the average particle size of agglomerates.

(3) Existence probability of discrete primary particles

As in the measurement of the average primary particle size, the transmitting electron microphotograph of the sample is taken.

With the magnification of 100,000, a cross section of Layer A is observed. An area of about 1 $\mu m^2$ is determined in the cross section and a total number N of the primary particles present in this area is counted. Among the particles, when a distance between the adjacent two particles is larger than the smaller primary particle size of the two particles, these particles are defined as the discrete primary particles. In this way, the number n of the discrete primary particles are counted and the existence probability of the discrete primary particles is calculated according to the equation: (n/N) x 100 (%) .

The above measurement is repeated with 50 visual fields, and the existence probabilities are averaged.

(4) Surface roughness
(center line average roughness Ra and largest protrusion height Rt)

Using a surface roughness tester (SE-3F manufactured by Kosaka Kenkyusho, Ltd.), the center line average roughness Ra and the largest protrusion height Rt are measured according to JIS B-0601-1976, with necessary modifications. The measuring conditions are the use of a contact needle having a tip radius of 2 $\mu m$, 30 mg of probe contact pressure, 0.08 mm of cutoff, and 2.5 mm of a measuring length.

The measurement is performed at 12 points on the film and the measured values at 10 points were averaged with neglecting the maximum and minimum values.

(5) Melt viscosity $\eta$

A composition which forms Layer A or B is dried and its melt viscosity $\eta$ (poise) is measured using a flow tester (CFT-500 A manufactured by Shimadzu having a nozzle of 1 mm in diameter and 10mm in length) at 280°C, a shear rate of 100/sec.

The difference of the melt viscosity between Layers A and B is calculated according to the equation:

$$|\log_{10}\eta^A - \log_{10}\eta^B|$$

(6) Thickness of the layers

As in the measurement of the average primary particle size, the cross section of the sample is observed by the transmitting electron microscope. The measurement is done at 10 different points in the machine direction or the transverse direction, and the thicknesses are averaged and a standard deviation is calculated. From the standard deviation, uniformity of the thickness is evaluated.

(7) Electromagnetic conversion characteristics

On an opposite surface to Layer A (in case of the A/B/A structure, one of two Layers A), a magnetic paint having the following composition, which has been dispersed in a ball mill for 24 hours, is gravure coated:

| Component | Parts |
|---|---|
| Co-containing iron oxide (BET specific surface area of 50 $m^2$/g) | 100 |
| Polyurethane resin | 10 |
| Nitrocellulose | 5 |
| Vinyl chloride-vinyl acetate copolymer | 10 |
| Lecitin | 2 |
| Polyisocyanate | 5 |
| Carbon black | 2 |
| Methyl ethyl ketone | 75 |
| Methyl isobutyl ketone | 75 |
| Toluene | 75 |

Before the magnetic paint is completely dried and solidified, the magnetic particles are magnetically oriented and the coated paint is dried. After super calendering the coated magnetic layer at 70°C under a linear pressure of 200 kg/cm, the magnetic layer is cured at 70°C for 48 hours. Then, the coated film is slit at a width of 1/2 inch (1.27 cm) to obtain a video tape.

The video tape is set in a cassette and its electromagnetic conversion characteristics are evaluated using a NV-3700 video deck (manufactured by Matsushita Electric) as follows:

The video tape is run and a VTR head output at a measuring frequency of 4 MHz is measured by a synchroscope. The measured value is expressed as a relative value (dB) to a VTR head output of a commercially available high grade video tape (0 dB).

(8) Coefficient of dynamic friction
(at initial running and after repeated running)

A coefficient of dynamic friction of the tape against a fixed hard chromium-plated metal pin having a diameter of 6 mm and a surface roughness of 3S is measured at an angle of contact of 135°. The film is run at a speed of 3.3 m/min. under tension of $T_1$ at the entering side and $T_2$ at the exiting side, and the coefficient of friction is calculated according to the following equation:

$$\mu_d = 0.424 \times \ln(T_1/T_2)$$

The tape is set so that the surface of Layer A contacts to the metal pin, and reciprocated with contacting the same part to the pin. The coefficient of friction is measured at the initial running (first time) and after repeated running (at 50th time) and compared.

(9) Abrasion resistance

Using an apparatus shown in the Figure having a tension meter (II), a film is run in a length of 200 m and an amount of white powder adhered to a fixed hard chromium-plated metal pin (I) having a diameter of 6 mm is evaluated with naked eyes and ranked according to the following criteria. The film speed is 10 m/min., the tension is about 200 g, and an angle of contact ($\theta$) is 135 °C.

A: No white powder
B: A slight amount of white powder
C: A small amount of white powder (larger than Rank B)
D: A large amount of white powder.

(10) Scratch resistance

A sample film having a width of 1/2 inch (1.27 cm) is run at 4 m/sec. under a tension of 50 g with contacting to a fixed hard chromium-plated metal pin having a diameter of 6 mm at an angle of contact of 135°, one time. Then, on the contacted surface of the film, aluminum is vacuum deposited to a thickness of about 1000 Å (100 nm), and the scratched condition is evaluated by naked eyes and ranked according to the following criteria:

1. A large number of scratches
2. A number of scratches
3. The number of scratches is between Ranks 2 and 4
4. A small number of scratches
5. No scratches

The film of Rank 3 or higher is practically acceptable.

Example 1

Preparation of Polyester Resin A

Aluminum oxide powder prepared by the flame hydrolysis method was dispersed in ethylene glycol and wet ground by a sand grinder, followed by sieving and filtering to obtain a slurry in which agglomerates having an average particle size of 120 nm were dispersed.

Dimethyl terephthalate (100 parts), ethylene glycol (65 parts) and magnesium acetate (0.09 part) were charged in a reactor and heated to effect transesterification while removing methanol. In about 4 hours from the start of the reaction, the temperature was raised to 230°C to complete the transesterification substantially.

To the reaction mixture, the above prepared slurry was added in an amount that the amount of the aluminum oxide agglomerates was 2.0 % by weight based on a weight of a polymer to be prepared. Thereafter, ethyl acid phosphate (0.4 part) and antimony trioxide (0.04 part) were added to the mixture and the polymerization was carried out by a conventional method to obtain Polyester Resin A having a melt viscosity of 2000 poise (200 Pa・s, 280°C, $\dot{\gamma}$ = 100/sec.).

Preparation of Polyester Resin B

To a polyethylene terephthalate resin prepared by a conventional method and containing substantially no inactive particles (Polyester Resin G), furnace carbon black (LCF) having an average particle size of 120 nm was added in an amount of 10 % by weight based on the weight of Polyester Resin G, and the resin containing carbon black was melt kneaded in a twin-screw extruder and extruded through a filter corresponding to #2000 mesh to remove coarse agglomerates to obtain Polyester Resin B having a melt viscosity of 1500 poise (150 Pa・s, 280°C, $\dot{\gamma}$ = 100/sec.).

Preparation of Polyester Resin C

In the same manner as in the preparation of Polyester Resin A except that an ethylene glycol slurry of calcium carbonate having an average particle size of 300 nm was added in an amount of 0.3 % by weight based on the weight of the polymer to be prepared in place of the ethylene glycol slurry of aluminum oxide agglomerates, polymerization was carried out to obtain Polyester Resin C having a melt viscosity of 2000 poise (200 Pa・s, 280°C, $\dot{\gamma}$ = 100/sec.).

Preparation of a film

Polyester Resins A and B were homogeneously mixed in a weight ratio of 2:1 and dried at 180°C under reduced pressure for 3 hours. Separately, Polyester Resin C alone was dried under the same conditions.

The mixture of Polyester Resins A and B and Polyester Resin C were charged in two layer co-extruders and melt extruded at 280°C. In this case, they were charged in two extruders so that the mixture of Polyester Resins A and B formed Layer A and Polyester Resin C formed Layer B, and extrudates were joined and laminated in a feed block and extruded in a film from from a slot die. The film was cooled and solidified on a casting roll with applying the electrostatic pinning to obtain an unoriented two layer film. Discharge amounts were so adjusted that a thickness ratio of Layer A to Layer B was 1:14.

The unoriented film was stretched in a machine direction at 85°C at a draw ratio of 2.4 times, and further at 92°C at a draw ratio of 1.3 times by roll stretching.

Then, the film was supplied to a tenter and stretched in a transverse direction at 110°C at a draw ratio of 3.8 times, followed by heat setting at 217°C to obtain a biaxially oriented film having a total thickness of 15 μm.

The properties of the film are shown in the Table.

## Example 2

In the same manner as in Example 1 except that Polyester Resins A, B and C were mixed in a weight ratio of 2:1:3 and used for the formation of Layer A and Polyester Resin C was used for the formation of Layer B, the resin were co-extruded. A thickness ratio of Layer A to Layer B was 5:10.

The obtained film was stretched and heat set in the same manner as in Example 1 to obtain a biaxially oriented film having a total thickness of 15 $\mu$m.

The properties of the film are shown in the Table.

## Example 3

### Preparation of Polyester Resin D

In the same manner as in Example 1 except that aluminum oxide was prepared by hydrolyzing Al(OC$_2$H$_7$)$_3$ in a liquid phase and dispersed in ethylene glycol, and the dispersion was wet ground, sieved and filtered to obtain a slurry containing agglomerates having an average particle size of 350 nm, Polyester Resin D was prepared. A content of aluminum oxide in the Resin was 3.0 % by weight. Polyester Resin D had a melt viscosity of 2000 poise (200 Pa • s, 280°C, $\dot{\gamma}$ = 100/sec.).

### Preparation of film

Polyester Resins D and B were mixed in a weight ratio of 1:1 and used for the formation of Layer A, and Polyester Resin C was used for the formation of Layer B.

The coextrusion was carried out to produce a film having a three layer structure A/B/A of two kinds of the resins. The preparation conditions were the same as in Example 1 except that a feed block which joined and laminated the extrudates so that two Layers A surrounded Layer B was used, and discharge amounts were adjusted so that a thickness ratio of A/B/A was 0.5/14/0.5. The extruded film was cooled, stretched and heat set in the same manner as in Example 1. Thereby, a biaxially oriented film having a total thickness of 15 $\mu$m was obtained.

The properties of the film are shown in the Table.

## Comparative Example 1

In the same manner as in the film preparation of Example 1 except that Polyester Resin C was mixed with Polyester Resin B to form Layer A in a weight ratio of 2:1, a biaxially oriented film having a total thickness of 15 $\mu$m was prepared.

Properties of the film are shown in the Table.

## Comparative Example 2

In the same manner as in the film preparation of Example 1 except that a thickness ratio of Layer A to Layer B was changed to 5:10, a biaxially oriented film having a total thickness of 15 $\mu$m was prepared.

Properties of the film are shown in the Table.

## Comparative Example 3

### Preparation of Polyester Resin E

In the same manner as in the preparation of Polyester Resin B in Example 1 except that monodisperse spherical silica having an average particle size of 300 nm was used in place of carbon black in an amount that its concentration in the polymer was 10 % by weight, Polyester Resin E having a melt viscosity of 1500 poise (150 Pa • s, 280°C, $\dot{\gamma}$ = 100/sec.) was prepared.

### Preparation of film

In the same manner as in the film preparation of Example 1 except that Polyester Resin E was used in place of Polyester Resin B and a weight ratio of Polyester Resin A to Polyester Resin E in Layer A was 1:1, a biaxially oriented film having a total thickness of 15 $\mu$m was prepared.

Properties of the film are shown in the Table.

**Table**

| Properties | Ex. 1 | Ex. 2 | Ex. 3 | C. E. 1 | C. E. 2 | C. E. 3 |
|---|---|---|---|---|---|---|
| Layer A: Aluminum oxide — Primary particle size (nm) | 20 | 20 | 30 | --- | 20 | 20 |
| Average particle size of agglomerates in slurry (nm) | 120 | 120 | 350 | --- | 120 | 120 |
| Amount (wt. %) | 1.33 | 0.67 | 1.50 | --- | 1.33 | 1.00 |
| Layer A: Carbon black — Primary particle size (nm) | 25 | 25 | 25 | 25 | 25 | --- |
| Average particle size of agglomerates in slurry (nm) | 120 | 120 | 120 | 120 | 120 | --- |
| Amount (wt. %) | 3.33 | 1.67 | 5.00 | 3.3 | 3.3 | --- |
| Other particles in Layer A (wt. %) | --- | --- | --- | --- | --- | Spher. silica (5.0) |
| Thickness (μm) (A/B or A/B/A) | 1/14 | 5/10 | 0.5/15/0.5 | 1/14 | 5/10 | 0.5/14.5 |
| Existence probability of primary particles | 7 | 18 | 8 | 19 | 6 | 8 |
| Surface roughness: Ra (nm) | 18 | 17 | 17 | 17 | 32 | 16 |
| Rt (nm) | 160 | 140 | 160 | 150 | 280 | 160 |
| Rt/Ra | 8.9 | 8.2 | 9.4 | 8.8 | 8.8 | 10.0 |
| Melt viscosity: $\eta^A$ (poise) | 1800 | 1900 | 1700 | 1800 | 1800 | 1700 |
| $\eta^B$ (poise) | 2000 | 2000 | 2000 | 2000 | 2000 | 2000 |
| $\lvert \log_{10}\eta^A - \log_{10}\eta^B \rvert$ | 0.046 | 0.022 | 0.071 | 0.046 | 0.046 | 0.071 |
| Electromagnetic conversion characteristics (dB) | +2.3 | +2.5 | +2.3 | +2.4 | -0.1 | +2.3 |
| Coefficient of dynamic friction — First time: | 0.20 | 0.20 | 0.20 | 0.20 | 0.18 | 0.18 |
| 50th time: | 0.20 | 0.21 | 0.20 | 0.28 | 0.18 | 0.26 |
| Abrasion resistance | A | A | A | D | A | D |
| Scratch resistance | 5 | 4 | 5 | 2 | 5 | 4 |

EP 0 550 011 B1

## Claims

1. A method for the production of a biaxially oriented laminated polyester film comprising at least two layers, at least one outermost layer of which contains 0.1 to 5.0 % by weight, based on the weight of the polyester, of aluminum oxide particles (A) having an average primary particle size of 5 to 40 nm and 0.3 to 10 % by weight, based on the weight of the polyester, of particles (B) having an average primary particle size of 10 to 100 nm which are other than aluminum oxide particles, wherein both types of particles are present in the film in the form of agglomerates to such an extent that the existence probability of discrete primary particles of the particles (A) and (B) in said outermost layer is not larger than 50 %, said outermost layer has a surface roughness Ra of 5 to 25 nm, and a ratio of a height Rt of the largest protuberance to Ra (Rt/Ra) is not larger than 15, by biaxially orientating a laminated polyester film, **characterized in that** said particles (A) are added to a raw material polyester for said at least one outermost layer in the form of a slurry of agglomerates having an average particle size of between 50 to 400 nm, and said particles (B) are added to said raw material polyester in the form of a slurry of agglomerates having an average particle size of between 100 and 400 nm.

2. The method according to caim 1, wherein said average primary particle size of aluminum oxide particles (A) is from 10 to 30 nm.

3. The method according to claim 1, wherein said other particles (B) are carbon black.

## Patentansprüche

1. Verfahren zur Herstellung eines biaxial orientierten Polyesterfolienlaminats, das mindestens zwei Schichten umfaßt, wobei mindestens eine äußerste Schicht hiervon 0,1 bis 5,0 Gew.-%, bezogen auf das Gewicht des Polyesters, Aluminiumoxidteilchen (A) mit einer durchschnittlichen primären Teilchengröße von 5 bis 40 nm und 0,3 bis 10 Gew.-%, bezogen auf das Gewicht des Polyesters, Teilchen (B) mit einer durchschnittlichen primären Teilchengröße von 10 bis 100 nm, welche von Aluminiumoxidteilchen verschieden sind, enthält, wobei beide Typen von Teilchen in der Folie in der Form von Agglomeraten bis zu einem solchen Ausmaß vorliegen, daß die Wahrscheinlichkeit des Vorliegens diskreter primärer Teilchen aus den Teilchen (A) und (B) in dieser äußersten Schicht nicht größer als 50 % ist, wobei diese äußerste Schicht eine Oberflächenrauhigkeit Ra von 5 bis 25 nm aufweist und das Verhältnis der Höhe Rt der größten Protuberanz zu Ra (Rt/Ra) nicht größer als 15 ist, durch biaxiales Orientieren eines Polyesterfolienlaminats, **dadurch gekennzeichnet**, daß die Teilchen (A) zu einem Polyesterausgangsmaterial für die mindestens eine äußerste Schicht in Form einer Aufschlämmung von Agglomeraten mit einer durchschnittlichen Teilchengröße zwischen 50 und 400 nm gegeben werden, und die Teilchen (B) zu dem Polyesterausgangsmaterial in Form einer Aufschlämmung von Agglomeraten mit einer durchschnittlichen Teilchengröße zwischen 100 und 400 nm gegeben werden.

2. Verfahren nach Anspruch 1, wobei die durchschnittliche primäre Teilchengröße der Aluminiumoxidteilchen (A) 10 bis 30 nm beträgt.

3. Verfahren nach Anspruch 1, wobei die anderen Teilchen (B) Ruß sind.

## Revendications

1. Procédé pour la production d'un film de polyester stratifié à orientation biaxiale comprenant au moins deux couches, dont au moins une couche externe contient 0,1 à 5,0% en poids, par rapport au poids du polyester, de particules d'oxyde d'aluminium (A) ayant une granulométrie primaire moyenne de 5 à 40 nm et 0,3 à 10% en poids, par rapport au poids du polyester, de particules (B) ayant une granulométrie primaire moyenne de 10 à 100 nm, qui sont autres que des particules d'oxyde d'aluminium, dans lequel les deux types de particules sont présents dans le film sous forme d'agglomérats dans une mesure telle que la probabilité de l'existence de particules primaires discrètes de particules (A) et (B) dans ladite couche externe ne dépasse pas 50%, ladite couche externe ayant une rugosité de surface Ra de 5 à 25 nm, et un rapport de la hauteur Rt de la protubérance la plus grande à Ra (Rt/Ra) ne dépassant pas 15, par orientation biaxiale d'un film de polyester stratifié, caractérisé en ce que lesdites particules (A) sont ajoutées à un polyester servant de matière première pour ladite au moins une couche externe sous forme d'une suspension d'agglomérats ayant une granulométrie moyenne comprise entre 50 et 400 nm, et lesdites particules (B) sont ajoutées audit polyester servant de matière première sous forme d'une suspension d'agglomérats ayant une granulométrie moyenne comprise entre 100 et 400 nm.

2. Procédé selon la revendication 1, dans lequel ladite granulométrie primaire moyenne des particules d'oxyde d'aluminium (A) est de 10 à 30 nm.

3. Procédé selon la revendication 1, dans lequel lesdites autres particules (B) sont du noir de carbone.

Figure